# EUROPÄISCHE PATENTSCHRIFT

(11) **EP 1 907 725 B1**
(45) Veröffentlichungstag und Bekanntmachung des Hinweises auf die Patenterteilung: **12.04.2017**
(21) Anmeldenummer: 06742883.9
(22) Anmeldetag: 11.05.2006
(51) Int. Cl.: F16G 13/06, C23C 8/34

(54) **GELENKKETTE MIT NITRIERTER LAGERFLÄCHE MIT OXIDATIONSSCHICHT**
LINK CHAIN HAVING NITRIDED BEARING FACE WITH OXIDATION COATING
CHAÎNE ARTICULÉE À SURFACE D'APPUI NITRURÉE COMPORTANT UNE COUCHE D'OXYDATION

(30) Priorität: 22.07.2005 DE 202005011573 U
(43) Veröffentlichungstag der Anmeldung: 09.04.2008
(73) Patentinhaber: iwis motorsysteme GmbH & Co. KG, 81369 München (DE); Bayerische Motoren Werke Aktiengesellschaft, 80809 München (DE)
(72) Erfinder: RIESS, Robert, 85244 Röhrmoos (DE); MITTRACH, Jürgen, 85622 Feldkirchen (DE); WEIKERT, Michael, 85464 Neufinsing (DE)
(74) Vertreter: Grünecker Patent- und Rechtsanwälte PartG mbB
(86) Internationale Anmeldenummer: PCT/EP2006/004459
(87) Internationale Veröffentlichungsnummer: WO 2007/009521

(56) Entgegenhaltungen:
- EP-A- 0 299 625
- EP-A- 0 655 512
- DE-A1- 10 126 937
- DE-T2- 3 486 076
- DE-U1- 20 206 947
- GB-A- 2 180 264

## Beschreibung

Die Erfindung bezieht sich auf eine Gelenkkette mit jeweils über ein Kettengelenk miteinander verbundenen Kettengliedern, wobei sich jeweils ein Gelenkbolzen zum Bilden eines Kettengelenks durch mindestens eine Gelenköffnung erstreckt und eine Lagerfläche der Gelenköffnung und/oder des Gelenkbolzens eine nitrierte Oberflächenschicht aufweist.

Eine gattungsgemäße Gelenkkette ist bereits aus der US 3,136,664, bei der zur Verbesserung der Verschleißfestigkeit die Hülse und der Kettenbolzen des Kettengelenks in einem Nitrierverfahren mit einer Metalldiffusionsschicht versehen sind. Dabei besteht die Oberflächenschicht aus Eisen und mindestens einem weiteren Metall sowie in diese Oberflächenschicht eingelagerten Nitriden.

Die JP 2000 249 196 A beschreibt eine Zahnlaschenkette, bei der Bolzen mit einer metallischen Karbidschicht in Laschen aus einem Kohlenstoff- oder Edelstahlmaterial eingesetzt sind, wobei die Oberflächen der Laschen mit einer Nitridschicht versehen sind.

Sowohl die DE 202 06 947 U1 als auch die US 3,912,551 beschreiben Kettenbolzen für Gelenkketten mit verbesserten Verschleißverhalten. Neben der Verwendung speziell legierter Edel- oder Kohlenstoffstähle werden die verbesserten Eigenschaften insbesondere durch das Härten der Oberflächenschicht in einem Nitrierverfahren erreicht.

Die EP 655 512 A1 beschreibt allgemein ein kombiniertes Verfahren zur Herstellung nitrierter oder nitrocarburierter metallischer Werkstücke mit einer einheitlichen Oxidationsschicht, wobei im Anschluss an das Nitrieren oder Karburieren als weiterer Verfahrensschritt eine Nachoxidation bei Temperaturen zwischen 500 und 550°C stattfindet.

Durch die fortschreitende technische Entwicklung steigen auch die Anforderungen an die Belastbarkeit und Verschleißfestigkeit von Gelenkketten. Insbesondere im Automobilbereich führt der Innovationsdruck zu einem ständigen Verbesserungsbedart mit einer notwendigen Anpassung der Eigenschaften von Gelenkketten an steigende Motorleistungen und der damit verbundenen Drehmomentübertragung sowie an die Anforderungen von Downsizing und Gewichtsreduktion. Auch besteht im Hinblick auf den in der Automobilindustrie üblichen Kostendruck in Verbindung mit hohen Stückzahlen generell die Notwendigkeit zu Innovationen und, im Hinblick auf gattungsgemäße Gelenkketten, kostengünstige Konzepte zur Lösung insbesondere der Verschleißproblematik zu finden.

Der vorliegenden Erfindung liegt daher die Aufgabe zugrunde, eine Gelenkkette mit guten Verschleißeigenschaften bei geringen Herstellungskosten bereitzustellen.

Diese Aufgabe wird bei einer gattungsgemäßen Gelenkkette dadurch gelöst, dass die nitrierte Oberflächenschicht der Lagerfläche eine äußere Oxidschicht zum Verbessern der Verschleißbeständigkeit des Kettengelenks aufweist.

Das Nitrieren oder Nitrocarborieren von niedrig legierten Stählen erhöht neben der Verbesserung der Verschleißbeständigkeit bekanntermaßen auch deren Korrosionsbeständigkeit, während die Korrosionsbeständigkeit von Stählen mit hohem Chrom- und Nickelgehalt abnimmt. Zum Ausgleich der reduzierten Korrosionsbeständigkeit insbesondere bei legierten Stählen kann sich an das Nitrier- oder Nitrocarborierverfahren ein Oxidieren der beschichteten Bauteile anschließen. Das Oxidieren nitrierter Oberflächen wird seit langem angewandt, um die Korrosionsfestigkeit nitrierter Bauteile zu erhöhen, beispielsweise auch für in der Automobilindustrie verwendete Bauteile. Dabei kompensiert die sich üblicherweise direkt an das Nitrierverfahren anschließende Nachoxidation nur die im Nitrier- oder Nitrocarborierverfahren verringerte Korrosionsbeständigkeit der beschichteten Oberflächen ohne eine gezielte Wirkung auf deren Verschleißbeständigkeit.

Mit der erfindungsgemäßen Lösung wird erstmals eine Gelenkkette bereitgestellt, bei der die Lagerfläche der Gelenköffnung und/oder des Gelenkbolzens eine äußere Oxidationsschicht zum Verbessern der Verschleißbeständigkeit des Kettengelenks aufweist. Durch die äußere Oxidationsschicht wird eine größere Druckvorspannung in der Oberfläche erzeugt. Die Verschleißbeständigkeit des Kettengelenks verbessert sich dabei gegenüber einem baugleichen Kettengelenk mit ausschließlich, aber ansonsten identischer nitrierter Oberflächenschicht der Lagerfläche. Neben der durch das Nitrieren der Oberflächenschicht der Lagerfläche erreichte Verbesserung der Dauerschwingfestigkeit, dem Widerstand gegen Oberflächenzerrüttung und aggressiven Verschleiß verbessert die äußere Oxidationsschicht die Dauerverschleißbeständigkeit durch ein Absenken des Anfangsverschleißes und führt dadurch zu deutlich verlängerten Betriebszeiten der Gelenkkette. Dadurch ist neben einer Verbesserung der Verschleißeigenschaften und der Betriebszeit der Gelenkkette bei gleichbleibenden Verschleißanforderungen ein Downsizing der Gelenkkette und/oder eine Verringerung der Herstellkosten möglich.

Um neben den guten Verschleißeigenschaften der Lagerfläche der Gelenköffnung und/oder des Gelenkbolzens eine ausreichende Härte im Kern zu ermöglichen, ist der Gelenkbolzen und/oder das Kettenglied aus einem legierten Stahl hergestellt. Bevorzugt kann dabei der nitrierte Stahl ein Nitrierstahl sein, insbesondere ein 39 CrMoV 13 9. Nitrierstähle sind besonders gut geeignet, um durch Nitrieren eine verschleißfeste Oberflächenschicht zu erzielen, da Nitrierstähle spezielle Nitridbildner erhalten, z.B. Chrom, Aluminium oder Molybdän. Eine bereits verschleißfeste Oberflächenschicht erleichtert bzw. erhöht die Verbesserung der Verschleißfestigkeit durch die äußere Oxidationsschicht.

Eine Ausführungsform gemäß der Erfindung sieht vor, dass die nitrierte Oberflächenschicht der Lagerfläche mittels eines ersten Verfahrens, nämlich eines Nitrierverfahrens, und die äußere Oxidationsschicht auf der nitrierten Oberflächenschicht mittels eines zweiten, vom ersten Verfahren unabhängigen Verfahrens, nämlich eines Oxidierverfahrens, aufgebracht sind. Die Aufteilung des Nitrier- und Oxidierverfahrens in zwei voneinander getrennte, vollständig unabhängige Verfahren ermöglicht eine bessere Abstimmung der Verfahren zueinander und die Vermeidung von Rückwirkungen, auch lassen sich die auftretenden Kosten durch beim Nitrieren verursachten Ausschuss reduzieren.

Eine Variante sieht vor, dass die Lagerfläche eine nitrocarborierte Oberflächenschicht aufweist. Die nitrocarborierte Oberflächenschicht der Lagerfläche entsteht durch eine Anreicherung der Randschicht des Werkstoffs mit Stickstoff und Kohlenstoff in einer thermochemischen Behandlung, wobei auch hier in einer äußeren Verbindungsschicht im Wesentlichen Eisennitrid entsteht. Durch die nitrocarborierte Oberflächenschicht wird der Widerstand gegen adhäsiven Verschleiß verstärkt.

Von Vorteil ist es weiter, dass das erste Verfahren ein Kurzzeitgasnitrierverfahren ist und die nitrocarborierte Oberflächenschicht mittels des Kurzzeitgasnitrierverfahrens aufgebracht ist. Das Kurzzeitgasnitrieren ermöglicht gegenüber anderen Nitrierverfahren kurze Verfahrensdauern.

Günstigerweise kann die nitrierte Oberflächenschicht eine 3 µm bis 30 µm dicke Randschicht aufweisen, die Eisennitrid (*ε - FeₓN*) umfasst. Eine solche überwiegend aus Eisennitrid bestehende Randschicht ermöglicht eine hohe Härte der nitrierten Oberflächenschicht als Grundlage für eine hohe Härte der äußeren Oxidationsschicht der Lagerfläche. Eine vorteilhafte Ausgestaltung sieht dabei vor, dass die nitrierte Oberflächenschicht eine Härte von 1.000 bis 1.500 HV 0,1 aufweist. Eine solche Härte bewirkt bei einer nitrierten Oberfläche und damit auch in Verbindung mit der äußeren Oxidationsschicht einen sehr hohen Widerstand gegenüber adhäsiven Verschleiß.

Für eine gleichmäßige Beschichtung der nitrierten Oberflächenschicht der Lagerfläche mit einer äußeren Oxidationsschicht kann das zweite Verfahren ein thermochemisches Oxidierverfahren sein. Als einfaches, nicht toxisches Reaktionsmittel kann das thermochemische Oxidierverfahren als Reaktionsmittel CO₂ verwenden.

Um die Verschleißbeständigkeit des Kettengelenks gegenüber einer nitrierten Oberflächenschicht der Lagerfläche signifikant zu verbessern, kann die äußere Oxidationsschicht auf einer nitrierten Oberflächenschicht eine Schichtstärke zwischen 0,5 µm und 2,0 µm, bevorzugt zwischen 0,75 µm und 1,5 µm, insbesondere ca. 1,0 µm aufweisen. Bereits geringe Schichtdicken der äußeren Oxidationsschicht führen zu einer Reduktion des Anfangsverschleißes und damit zu einer verbesserten Dauerverschleißbeständigkeit. Um eine solche ausreichende Verbesserung der Verschleißbeständigkeit zu erreichen, kann die äußere Oxidationsschicht gegenüber der nitrierten Oberflächenschicht eine erhöhte Dichte aufweisen.

Eine Ausgestaltung gemäß der Erfindung sieht vor, dass die Lagerfläche der Gelenköffnung und/oder des Gelenkbolzens zwischen dem ersten und zweiten Verfahren einem Zwischenbehandlungsschritt ausgesetzt ist. Ein derartiger Zwischenbehandlungsschritt ermöglicht eine gezielte Vorbereitung des notwendigen Oxidierverfahrens und damit als Resultat eine verbesserte äußere Oxidationsschicht. Erfindungsgemäß, ist mittels Gleitschleifen der nitrierten Oberflächenschicht der Gelenköffnung und/oder des Gelenkbolzens als Zwischenbehandlungsschritt der Übergang zwischen der nitrierten Oberflächenschicht der äußeren Oxidationsschicht im Wesentlichen rückstandsfrei ausgebildet ist. Zur Verhinderung der Gefahr des Ablösens der äußeren Oxidationsschicht von der nitrierten Oberflächenschicht der Lagerfläche ist mittels Gleitschleifen der Übergang zwischen der nitrierten Oberflächenschicht und der äußeren Oxidationsschicht von einem vorher auf der nitrierten Oberflächenschicht vorhandenen Porensaum befreit.

Eine zweckmäßige Ausführungsform sieht vor, dass der Gelenkbolzen im gesamten Bereich seiner die Mantelfläche bildenden Randschicht eine nitrierte Oberflächenschicht mit einer äußeren Oxidationsschicht aufweist. Durch die ununterbrochene nitrierte Oberflächenschicht mit einer äußeren Oxidationsschicht entlang der Mantelfläche des Gelenkbolzens lassen sich Schwachpunkte beim Übergang von beschichteter zu unbeschichteter Oberfläche vermeiden. Zwischen den mit der Lagerfläche der Gelenköffnung in Kontakt stehenden tragenden Flächen des Gelenkbolzens können so Bereiche mit geringerem Verschleißwiderstand verhindert werden.

Um die Verwendung der erfindungsgemäßen Gelenkkette in besonderen Einsatzbereichen, z.B. als Antriebsmittel für stufenlos verstellbare Getriebe, zu ermöglichen, kann die Gelenkkette als Laschenkette, insbesondere als Zahnlaschenkette ausgebildet sein.

Eine besondere Ausbildung sieht vor, dass die Lagerflächen der Gelenköffnung in den Kettenlaschen des Innenkettenglieds der Laschenkette eine nitrierte Oberflächenschicht mit einer äußeren Oxidationsschicht aufweisen. Eine nitrierte Oberflächenschicht mit einer äußeren Oxidationsschicht auf der Lagerfläche der Gelenköffnung ist an sich schon ausreichend, um die Verschleißbeständigkeit des Kettengelenks zu verbessern. In Kombination mit einem Gelenkbolzen mit nitrierter Oberflächenschicht mit äußerer Oxidationsschicht kann der Verschleiß im Kettengelenk minimiert werden.

Bevorzugt kann sich der Gelenkbolzen zum Bilden des Kettengelenks durch die Gelenköffnung von mindestens zwei außen angeordneten Außenlaschen und einer oder mehrerer als Paket oder alternierend angeordneter innen liegender Kettenlaschen erstreckt. Solche Gelenkketten aus Laschenpaketen mit Innen- und Außenlaschen werden als einfache Laschen- oder Zahnlaschenketten in großen Stückzahlen und mit einem hohen Automatisierungsgrad für viele industrielle Bereiche, z.B. auch für den Kraftfahrzeugbereich, hergestellt. Da sich der Gelenkbolzen dabei durch mehrere nebeneinander angeordnete Gelenköffnungen erstreckt, die sich bei alternierender Anordnung gegeneinander verdrehen, kommt hier der Anwendung der äußeren Oxidationsschicht auf der nitrierten Oberflächenschicht der Lagerfläche eine besondere Bedeutung zu, um die Laufzeiten derartiger Laschenketten zu erhöhen.

Für einen weiteren bevorzugten Einsatzbereich kann die Gelenkkette als Hülsen- oder Rollenkette ausgebildet sein. Aus Vereinfachungsgründen kann die Lagerfläche der Gelenköffnung durch eine mit dem Kettenglied verbundene Gelenkhülse gebildet sein. Dadurch können die Kettenlaschen und die Gelenkhülse mit der Lagerfläche unabhängig voneinander hergestellt und anschließend miteinander verbunden werden.

Vorteilhafterweise kann die Gelenkhülse im gesamten Bereich seiner die Mantelfläche bildenden Randschicht eine nitrierte Oberflächenschicht mit einer äußeren Oxidationsschicht aufweisen. Eine derartige Ausbildung verhindert Schwachpunkte bei ansonsten notwendigen Verbindungsstellen zwischen der Gelenkhülse selbst und ihrer Lagerfläche. Auch können so die notwendigen Arbeitsschritte und die Produktionskosten zur Herstellung der Gelenkhülse gering gehalten werden.

Eine bevorzugte Ausführungsform sieht vor, dass abwechselnd Innenkettenglieder, die mindestens zwei Innenlaschen und zwei, die Innenlaschen im parallelen Abstand zueinander verbindende Gelenkhülsen aufweisen, und Außenkettenglieder, die mindestens zwei Außenlaschen und zwei, die Außenlaschen im parallelen Abstand zueinander verbindende Gelenkbolzen aufweisen, über jeweils ein Kettengelenk miteinander verbunden sind. Gelenkketten aus Innen- und Außenkettengliedern, insbesondere Rollen- und Hülsenketten, werden in großen Stückzahlen bei einem hohen Automatisierungsgrad für nahezu alle industriellen Bereiche hergestellt. Die Massenproduktion führt entsprechend auch zu geringen Kosten dieser Form von Gelenkketten. Die Gelenkhülsen sind dabei fest mit den Innenlaschen verbunden, insbesondere durch einpressen oder einkleben. Da die Gelenkhülse über die gesamte Breite des Innenkettengliedes drehbar auf dem Gelenkbolzen gelagert ist, ist die Belastung und der Verschleiß eines Kettengelenks mit einer nitrierten Oberflächenschicht der Lagerfläche mit äußerer Oxidationsschicht besonders gering.

Im Folgenden werden Ausführungsformen der vorliegenden Erfindung anhand einer Zeichnung näher erläutert. Es zeigen:
- Fig. 1: eine Draufsicht mit einem bereichsweisen Schnitt einer erfindungsgemäßen Gelenkkette,
- Fig. 2: eine Draufsicht mit einem bereichsweisen Schnitt einer zweiten Ausführungsform der Gelenkkette,
- Fig. 3: eine Draufsicht mit einem bereichsweisen Schnitt einer dritten Ausführungsform der Gelenkkette, und
- Fig. 4: eine Draufsicht mit einem bereichsweisen Schnitt einer vierten Ausführungsform der Gelenkkette.

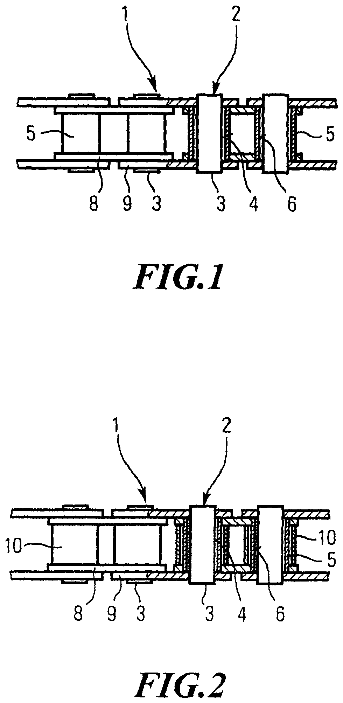

Die in Fig. 1 dargestellte erfindungsgemäße Gelenkkette 1 ist als Hülsenkette ausgeführt, mit jeweils über ein Kettengelenk 2 verbundenen Innenkettengliedern und Außenkettengliedern. Das Innenkettenglied besteht jeweils aus zwei parallel verlaufenden Innenlaschen 8 und zwei die Innenlaschen 8 miteinander verbundenen Gelenkhülsen 5, wobei die Gelenkhülsen 5 senkrecht zu den Innenlaschen 8 stehen und die Gelenkhülsen 5 fest mit den Innenlaschen 8 verbunden sind, insbesondere durch Pressen oder Kleben. Die Außenkettenglieder bestehen aus zwei parallel verlaufenden Außenlaschen 9, die mit zwei Gelenkbolzen 3 miteinander verbunden sind, wobei die Gelenkbolzen 3 drehbar in den Gelenkhülsen 5 der Innenkettenglieder gelagert sind. Das Außenkettenglied ist durch den Gelenkbolzen 3 drehbar an einem Innenkettenglied befestigt und verbindet durch die Außenlaschen 9 das Innenkettenglied mit einem zweiten Innenkettenglied, wobei die Außenlaschen 9 parallel zu den Innenlaschen 8 verlaufen. Die Gelenkbolzen 3 des Außenkettenglieds sind in die Gelenkhülsen 5 des Innenkettenglieds drehbar gelagert, wodurch die Verbindung jeweils ein Kettengelenk 2 der Gelenkkette 1 bilden. Die Achsen der ineinander verlaufenden Gelenkbolzen 3 und Gelenkhülsen 5 fluchten zueinander.

Bei der Hülsenkette aus Fig. 1 berühren die Zahnflanken des eingreifenden Kettenrades die feststehenden Gelenkhülsen 5 stets an der gleichen Stelle der äußeren Oberfläche, weshalb auch hier ein hoher Verschleißwiderstand oder eine einwandfreie Schmierung notwendig ist. Hülsenketten weisen aber auch durch den großen Durchmesser der Gelenkbolzen 3 eine große Gelenkfläche auf, die eine geringere Gelenkflächenpressung und damit einen geringern Verschleiß des Kettengelenks 2 bewirkt. Im Automobilbereich werden Hülsenketten insbesondere bei hochbeanspruchten Nockenwellenantrieben sowie in schnell laufenden Dieselmotoren eingesetzt.

Die Figuren 2 bis 4 zeigen weitere Ausgestaltungen der erfindungsgemäßen Gelenkkette 1, wobei im Folgenden nur die wesentlichen Unterschiede zu der in Fig. 1 gezeigten Hülsenkette beschrieben werden. Für identische und wirkungsgleiche Elemente werden gleiche Bezugsziffern verwendet, hinsichtlich der Ausführung und Funktion ist auf die obige Beschreibung zu Fig. 1 verwiesen.

Fig. 2 zeigt eine erfindungsgemäße Gelenkkette 1 in Form einer Rollenkette. Auch bei dieser Rollenkette besteht das Innenkettenglied aus zwei parallel verlaufenden Innenlaschen 8 und zwei die Innenlaschen 5 miteinander verbindenden Gelenkbolzen 3 sowie zusätzlich aus zwei zwischen den Innenlaschen 8 die Gelenkhülsen 5 umschließenden Laufrollen 10. Neben den Gelenkbolzen 3 stehen auch die Laufrollen 10 senkrecht zu den Innenlaschen 8. Die Achsen der ineinander verlaufenden Laufrollen 10, Gelenkhülsen 5 und Gelenkbolzen 3 fluchten zueinander.

Die sich über die Gelenkhülsen 5 drehenden Laufrollen 10 der Rollenkette rollen mit wenig Reibung an den Zahnflanken des mit der Rollenkette in Eingriff stehenden Kettenrades ab, so dass immer wieder eine andere Stelle des Umfangs der Laufrollen 10 zum Tragen kommen. Ein Fettpolster zwischen den Laufrollen 10 und den Gelenkhülsen 5 kann zu Geräusch- und Stoßdämpfung beitragen. Die Kettengelenke 2 der Rollenkette weisen im Vergleich zur Hülsenkette üblicherweise einen geringeren Durchmesser der Gelenkbolzen 3, eine kleinere Gelenkfläche und damit eine größere Gelenkflächenpressung auf. Diese erhöhte Belastung des Kettengelenks 2 erfordert eine besondere Beachtung der Verschleißeigenschaften entsprechend einer erfindungsgemäßen Ausgestaltung der Lagerfläche 4 der Gelenkbolzen 2 und/oder der Lagerfläche 6 der Gelenkhülse 5.

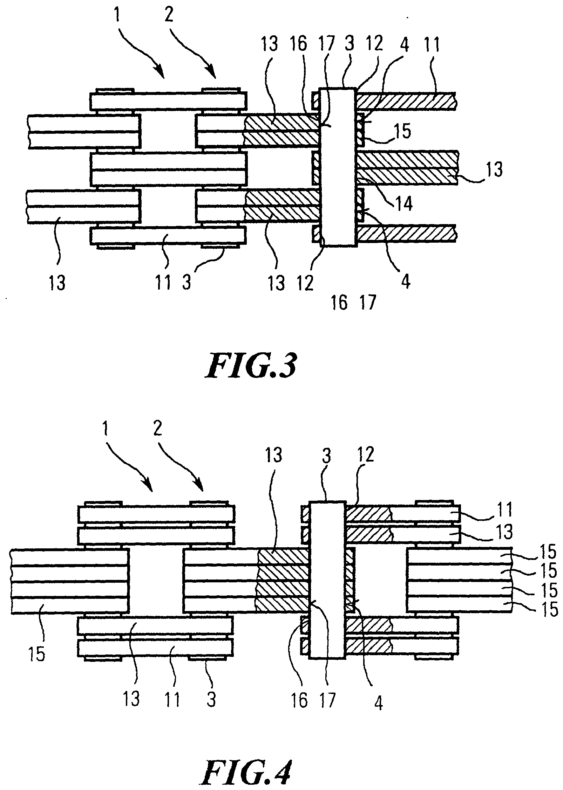

Die in Fig. 3 dargestellte erfindungsgemäße Gelenkkette 1 ist als Laschenkette, insbesondere als Zahnlaschenkette ausgeführt mit jeweils über ein Kettengelenk 2 abwechselnd aneinander angeordnete Außenkettenglieder und Innenkettenglieder. Die Außenkettenglieder bestehen dabei aus zwei jeweils außen angeordneten Außen- bzw. Führungslaschen 11 mit Gelenköffnungen 12 und zwei mittig als Paket angeordnete Kettenlaschen 13, insbesondere Zahnlaschen, mit Gelenköffnungen 14. Die Gelenköffnungen 12 der Außenlaschen 11 und die Gelenköffnungen 14 der Kettenlaschen 13 fluchen zueinander, wobei der Gelenkbolzen 3 zumindest in die Gelenköffnungen 12 der Außenlaschen 11 eingepresst ist und sich durch die Gelenköffnung 14 der Kettenlaschen 13 erstreckt oder ebenfalls dort eingepresst ist. Die Außen- bzw. Führungslaschen 11 und die innen liegenden Kettenlaschen 13 sind parallel zueinander und senkrecht zu dem Gelenkbolzen 3 angeordnet. Die Innenkettenglieder umfassen jeweils vier Kettenlaschen 15, die jeweils paarweise nach innen weisend links und rechts von den Außenlaschen 11 angeordnet sind. Auch die Innenlaschen 15 des Innenkettenglieds sind parallel zueinander und senkrecht zu dem Gelenkbolzen 3 angeordnet. Dabei sind die zueinander fluchtenden Gelenköffnungen 16 der Kettenlaschen 15 so groß ausgebildet, dass sie sich deren Lagerflächen 17 frei auf dem Außenumfang des Gelenkbolzens 3 bewegen können. Jedes Kettengelenk 2 wird von einem Gelenkbolzen 3 des Außenkettengliedes und von den Gelenköffnungen 16 der Kettenlaschen 15 des Innenkettenglieds gebildet.

Um die von den Innenlaschen 15 auf den Gelenkbolzen 3 ausgeübte Belastung noch weiter zu reduzieren, können die Innenlaschen 15, wie in Fig. 4 dargestellt, auch als Paket nebeneinander angeordnet sein, so dass beiderseitig nur jeweils die Lagerflächen 17 der äußeren Gelenköffnung 16 der im Paket außen liegenden Kettenlaschen 15 eine Kraft auf dem Gelenkbolzen 3 ausübt. Um diese Wirkung noch zu verbessern, können die Innenlaschen 15 miteinander verbunden sein, um so ein Ausscheren der einzelnen Innenlaschen 15 zu verhindern. Auch kann eine einzelne Innenlasche 15 ausgebildet sein, die eine entsprechend größere Dicke aufweist, z.B. die Dicke vier nebeneinander angeordneter Kettenlaschen 15.

Als Laschen- oder Zahnlaschenketten ausgestaltete Gelenkketten 1 werden aufgrund der verringerten Geräuschentwicklung für eine Vielzahl unterschiedlichster Anwendungen eingesetzt, in einem zunehmenden Maße auch im Bereich der Automobilindustrie. Für Anwendungen im Kraftfahrzeugbereich, insbesondere im Verbrennungskraftmotor, kann eine regelmäßige Wartung und damit verbunden auch die Schmierung der Kette nicht vorausgesetzt werden, weshalb die Anforderungen an die Verschleißfestigkeit der einzelnen Kettenelemente besonders hoch ist. Üblicherweise ist bei Zahnlaschenketten der Gelenkbolzen 3 nicht nur in den Gelenköffnungen 12 der Außenkettenglieder 11, sondern auch in den Gelenköffnungen 14 der innen liegenden Kettenglieder 13 eingepresst. Daher wird das Kettengelenk 2 bei Laschenketten üblicherweise durch den fest im Außenkettenglied eingepressten Gelenkbolzen 3 und den Gelenköffnungen 16 der Innenkettenlaschen 15 des Innenkettenglieds gebildet. Durch die geringe Gelenkfläche dieses Kettengelenks ergibt sich eine relativ große Gelenkflächenpressung und damit ein erhöhter Verschleiß im Kettengelenk 2 dem durch die verbesserte Verschleißbeständigkeit des Kettengelenks 2 durch die nitrierte Oberflächenschicht mit äußerer Oxidationsschicht entgegengewirkt wird. Der erhöhte Verschleiß solcher Laschen- oder Zahnlaschenketten wirkt gleichermaßen auf den Gelenkbolzen 3 und die Gelenköffnungen 16 in den Ketten- oder Zahnlaschen 15 des Innenkettenglieds, weshalb eine nitrierte Oberflächenschicht mit äußerer Oxidationsschicht sowohl auf der Lagerfläche 4 des Gelenkbolzens 3 als auch auf der Lagerfläche 17 der Innenlaschen 15 für eine optimale Verbesserung der Verschleißbeständigkeit des Kettengelenks 2 sinnvoll ist.

Die Lagerfläche 4 der Gelenkbolzen 3 und/oder die Lagerfläche 6 der Gelenkhülse 5 bzw. die Lagerfläche 17 der Innenlaschen 15 einer erfindungsgemäßen Gelenkkette 1 werden in einem Gasdiffusionsverfahren, einem SAFED-Verfahren (OCN), beschichtet, wobei die geschliffenen Kettenbauteile aus 39 CrMoV 13 9 bei einer Temperatur von 550 bis 600°C über einen Zeitraum von 60 bis 120 Minuten nitrocarboriert werden. Aus dem Prozessgas diffundiert Stickstoff und Kohlenstoff in die Oberflächenschicht der Gelenkbolzen 3 und/oder der Gelenkhülsen 5 bzw. der Innenlaschen 15 ein und bildet eine äuβere Verbindungsschicht aus Eisennitrid, *ε - FeₓN* mit einer Stärke von 5 µm bis 10 µm und einer Härte von 1.000 bis 1.500 HV 0,1. Zum Inneren hin schließt sich eine Schicht aus *γ - Fe*₄*N* an, ehe eine Stickstoffsdiffusionsschicht erreicht wird. Die *ε - FeₓN -* Schicht erhöht den Widerstand gegenüber adhäsiven Verschleiß. In der äußeren Randschicht der Verbindungsschicht befindet sich ein Porensaum.

In einem Zwischenbehandlungsschritt wird dieser Porensaum und alle weiteren Rückstände auf der äußeren Verbindungsschicht aus Eisennitrid durch Gleitschleifen entfernt. Die Kettenbauteile werden während des Zwischenbehandlungsschritts überprüft und fehlerhafte Teile aussortiert, um den nächsten Verfahrensschritt, dem Oxidieren, nur einwandfreie Kettenbauteile zuzuführen.

Das Oxidieren der nitrierten bzw. nitrocarborierten Lagerfläche 4 der Gelenkbolzen 3 und/oder der Lagerfläche 6 der Gelenkhülsen 5 bzw. der Lagerfläche 17 der Innenlaschen 15 erfolgt wiederum in einer thermochemischen Behandlung, wobei als Prozessgas CO₂ eingesetzt wird. Bei diesem thermochemischen Oxidationsverfahren wird bei einer Temperatur von 440 bis 480°C über einen Zeitraum von 60 bis 120 Minuten auf der nitrierten Oberflächenschicht durch die Diffusion von Sauerstoff aus dem Prozessgas in die Eisennitridschicht eine dünne Eisenoxidschicht von ca. 1 µm aufgebaut, die gegenüber der nitrierten Oberflächenschicht eine deutlich erhöhte Dichte aufweist. Die nitrierte Oberflächenschicht mit der äußeren Oxidationsschicht verbessert so die Verschleißbeständigkeit des Kettengelenks gegenüber einer nur nitrierten Oberflächenschicht deutlich.

## Patentansprüche

1. Gelenkkette (1) mit jeweils über ein Kettengelenk (2) miteinander verbundenen Kettengliedern, wobei sich jeweils ein Gelenkbolzen (3) zum Bilden eines Kettengelenks (2) durch mindestens eine Gelenköffnung erstreckt, eine Lagerfläche (4,6,17) der Gelenköffnung und/oder des Gelenkbolzens (3) eine nitrierte Oberflächenschicht aufweist, und der Gelenkbolzen (3) und/oder das Kettenglied aus einem legierten Stahl hergestellt sind,
**dadurch gekennzeichnet, dass** die nitrierte und porensaumfreie Oberflächenschicht der Lagerfläche (4,6,17) eine äußere Oxidationsschicht zum Verbessern der Verschleißbeständigkeit des Kettengelenks (2) aufweist, wobei der Übergang zwischen der nitrierten Oberflächenschicht und der äußeren Oxidationsschicht mittels Gleitschleifen der nitrierten Oberflächenschicht von einem vorher auf der nitrierten Oberflächenschicht vorhandenen Porensaum befreit ist und im Wesentlichen rückstandsfrei ausgebildet ist.

2. Gelenkkette (1) nach Anspruch 1,
**dadurch gekennzeichnet, dass** der legierte Stahl des Gelenkbolzens (3) und/oder des Kettenglieds ein Nitrierstahl ist, insbesondere ein 39 CrMoV 13 9.

3. Gelenkkette (1) nach Anspruch 1 oder 2,
**dadurch gekennzeichnet, dass** die Lagerfläche (4,6,17) eine nitrocarborierte Oberflächenschicht aufweist.

4. Gelenkkette (1) nach einem der Ansprüche 1 bis 3,
**dadurch gekennzeichnet, dass** die nitrierte Oberflächenschicht eine 3 µm bis 30 µm dicke Randschicht aufweist, die Eisennitirid umfasst.

5. Gelenkkette (1) nach einem der Ansprüche 1 bis 4,
**dadurch gekennzeichnet, dass** die nitrierte Oberflächenschicht eine Härte von 1000 bis 1500 HV 0,1 aufweist.

6. Gelenkkette (1) nach einem der Ansprüche 1 bis 5,
**dadurch gekennzeichnet, dass** die äußere Oxidationsschicht auf der nitrierten Oberflächenschicht eine Schichtstärke zwischen 0,5 µm und 2,0 µm, bevorzugt zwischen 0,75 µm und 1,5 µm, insbesondere ca. 1,0 µm aufweist.

7. Gelenkkette (1) nach einem der Ansprüche 1 bis 6,
**dadurch gekennzeichnet, dass** die äußere Oxidationsschicht gegenüber der nitrierten Oberflächenschicht eine erhöhte Dichte aufweist.

8. Gelenkkette (1) nach einem der Ansprüche 1 bis 7,
**dadurch gekennzeichnet, dass** der Gelenkbolzen (3) im gesamten Bereich seiner die Mantelfläche bildenden Randschicht eine nitrierte Oberflächenschicht mit einer äußeren Oxidationsschicht aufweist.

9. Gelenkkette (1) nach Anspruch 8,
**dadurch gekennzeichnet, dass** die Gelenkkette (1) als Laschenkette, insbesondere als Zahnlaschenkette ausgebildet ist.

10. Gelenkkette (1) nach einem der Ansprüche 1 bis 9,
**dadurch gekennzeichnet, dass** nur die Lagerflächen (4,6,17) der Gelenköffnung (16) in den Innenlaschen (15) der Laschenkette eine nitrierte Oberflächenschicht mit einer äußeren Oxidationsschicht aufweisen.

11. Gelenkkette (1) nach Anspruch 9 oder 10,
**dadurch gekennzeichnet, dass** sich der Gelenkbolzen (3) zum Bilden des Kettengelenks (2) durch die Gelenköffnungen von mindestens zwei außen angeordneten Außenlaschen (11) und einer oder mehrerer als Paket oder alternierend angeordneter Innen- und Kettenlaschen (13,15) erstreckt.

12. Gelenkkette (1) nach einem der Ansprüche 1 bis 8,
**dadurch gekennzeichnet, dass** die Gelenkkette (1) als Hülsen- oder Rollenkette ausgebildet ist.

13. Gelenkkette (1) nach Anspruch 12,
**dadurch gekennzeichnet, dass** die Lagerfläche (6) der Gelenköffnung durch eine mit einem Kettenglied verbundene Gelenkhülse (5) gebildet ist.

14. Gelenkkette (1) nach Anspruch 13,
**dadurch gekennzeichnet, dass** die Gelenkhülse (5) im gesamten Bereich seiner die Mantelfläche bildenden Randschicht eine nitrierte Oberflächenschicht mit einer äußeren Oxidationsschicht aufweist.

15. Gelenkkette (1) nach einem der Ansprüche 12 bis 14,
**dadurch gekennzeichnet, dass** abwechselnd Innenkettenglieder, die mindestens zwei Innenlaschen (8) und zwei, die Innenlaschen (8) im parallelen Abstand zueinander verbindende Gelenkhülsen (5) aufweisen, und Außenkettenglieder, die mindestens zwei Außenlaschen (9) und zwei, die Außenlaschen (9) im parallelen Abstand zueinander verbindende Gelenkbolzen (3) aufweisen, über jeweils ein Kettengelenk (2) miteinander verbunden sind.

16. Verfahren zum Herstellen einer verschleißbeständigen Oberflächenschicht für eine Lagerfäche der Gelenköffnung und/oder des Gelenkbolzens des Kettengelenks einer Gelenkkette, wobei der Gelenkbolzen (3) und/oder das Kettenglied aus einem legierten Stahl hergestellt sind,
wobei eine nitrierte Oberflächenschicht der Lagerfläche (4,6,17) mittels eines ersten Verfahrens, nämlich eines Nitrierverfahrens, und eine äußere Oxidationsschicht auf der nitrierten Oberflächenschicht mittels eines zweiten, vom ersten Verfahren unabhängigen Verfahrens, nämlich eines Oxidierverfahrens, aufgebracht wird,
wobei die Lagerfläche (4,6,17) der Gelenköffnung und/oder des Gelenkbolzens (3) zwischen dem ersten und zweiten Verfahren mittels Gleitschleifen mechanisch bearbeitet wird, um den Übergang zwischen der nitrierten Oberflächenschicht und der äußeren Oxidationsschicht mittels dem Gleitschleifen der nitrierten Oberflächenschicht im Wesentlichen rückstandsfrei auszubilden und von einem vorher auf der nitrierten Oberflächenschicht vorhandenen Porensaum zu befreien.

17. Verfahren nach Anspruch 16,
wobei das erste Verfahren ein Kurzzeitgasnitrierverfahren ist, wobei mittels des Kurzzeitgasnitrierverfahrens eine nitrocarborierte Oberflächenschicht aufgebracht wird.

18. Verfahren nach Anspruch 16 oder 17,
wobei das zweite Verfahren ein thermochemisches Oxidierverfahren ist.

19. Verfahren nach Anspruch 18,
wobei das thermochemische Oxidierverfahren als Reaktionsmittel CO₂ verwendet.

## Claims

1. Link chain (1) having chain members respectively interconnected via a chain link (2), wherein a respective link pin (3) extends through at least one link opening for forming a chain link (2), a bearing face (4, 6, 17) of the link opening and/or of the link pin (3) comprises a nitrided surface layer, and the link pin (3) and/or the chain member are made from an alloyed steel, **characterized in that** the nitrided surface layer of the bearing face (4, 6, 17) which is without a porous zone has an outer oxidation layer for improving the wear resistance of the chain link (2), wherein the transition between the nitrided surface layer and the outer oxidation layer is freed by way of vibratory grinding of the nitrided surface layer from a porous zone previously existing on the nitrided surface layer and is substantially formed without residue.

2. Link chain (1) according to claim 1,
**characterized in that** the alloyed steel of the link pin (3) and/or of the chain member is a nitriding steel, particularly a 39 CMoV 13 9.

3. Link chain (1) according to claim 1 or 2,
**characterized in that** the bearing face (4, 6, 17) comprises a nitrocarburized surface layer.

4. Link chain (1) according to any one of claims 1 to 3,
**characterized in that** the nitrided surface layer comprises an edge layer having a thickness of 3 µm to 30 µm, which comprises iron nitride.

5. Link chain (1) according to any one of claims 1 to 4,
**characterized in that** the nitrided surface layer has a hardness of 1000 to 1500 HV 0.1.

6. Link chain (1) according to any one of claims 1 to 5,
**characterized in that** the outer oxidation layer on the nitrided surface layer has a layer thickness between 0.5 µm and 2.0 µm, preferably between 0.75 µm and 1.5 µm, particularly about 1.0 µm.

7. Link chain (1) according to any one of claims 1 to 6,
**characterized in that** the outer oxidation layer has an increased density in relation to the nitrided surface layer.

8. Link chain (1) according to any one of claims 1 to 7,
**characterized in that** the link pin (3) throughout the area of its edge layer forming the outer surface comprises a nitrided surface layer with an outer oxidation layer.

9. Link chain (1) according to claim 8,
**characterized in that** the link chain (1) is configured as a plate-link chain, particularly as a tooth-plate chain.

10. Link chain (1) according to ay one of claims 1 to 9,
**characterized in that** only the bearing faces (4, 6, 17) of the link opening (16) in the inner plates (15) of the plate-link chain comprise a nitrided surface layer with an outer oxidation layer.

11. Link chain (1) according to claim 9 or 10,
**characterized in that** the link pin (3) for forming the chain link (2) extends through the link openings of at least two outer plates (11) arranged on the outside and of one or more inner and chain plates (13, 15) arranged as a packet or alternatingly.

12. Link chain (1) according to any one of claims 1 to 8,
**characterized in that** the link chain (1) is configured as a sleeve-type or roller chain.

13. Link chain (1) according to claim 12,
**characterized in that** the bearing face (6) of the link opening is formed by an articulation sleeve (5) connected to a chain member.

14. Link chain (1) according to claim 13,
**characterized in that** the articulation sleeve (5) throughout the area of its edge layer forming the outer surface comprises a nitrided surface layer with an outer oxidation layer.

15. Link chain (1) according to any one of claims 12 to 14,
**characterized in that** inner chain members which comprise at least two inner plates (8) and two articulation sleeves (5) connecting the inner plates (8) at a parallel distance to each other, and outer chain members which comprise at least two outer plates (9) and two link pins (3) connecting the outer plates (9) at a parallel distance to each other are alternatingly interconnected via a respective chain link (2).

16. Method for producing a wear-resistant surface layer for a bearing face of the link opening and/or of the link pin of the chain link of a link chain, wherein the link pin (3) and/or the chain member are made of an alloyed steel,
wherein a nitrided surface layer of the bearing face (4, 6, 17) is applied by way of a first method, namely a nitriding method, and an outer oxidation layer is applied to the nitrided surface layer by way of a second method independent of the first method, namely an oxidation method,
wherein the bearing face (4, 5, 17) of the link opening and/or the link pin (3) are mechanically treated between the first and second method by way of vibratory grinding to form the transition between the nitrided surface layer and the outer oxidation layer by way of the vibratory grinding of the nitrided surface layer substantially without residue and to free it from a porous zone previously existing on the nitrided surface layer.

17. Method according to claim 16,
wherein the first method is a short-time gas nitriding method, wherein a nitrocarburized surface layer is applied by way of the short-time gas nitriding method.

18. Method according to claim 16 or 17,
wherein the second method is a thermochemical oxidizing method.

19. Method according to claim 18,
wherein the thermochemical oxidizing method uses CO₂ as reactant.

## Revendications

1. Chaine articulée (1) comprenant des maillons de chaine reliés les uns aux autres respectivement par l'intermédiaire d'une articulation de chaine (2), chaine articulée dans laquelle pour chaque articulation un axe d'articulation (3) s'étend à travers au moins une ouverture d'articulation pour former une articulation de chaine (2), une surface de palier (4, 6, 17) de l'ouverture d'articulation et/ou de l'axe d'articulation (3) présente une couche de surface nitrurée, et l'axe d'articulation (3) et/ou le maillon de chaine sont fabriqués en un acier allié,
**caractérisée en ce que** la couche de surface nitrurée et exempte d'une lisière superficielle poreuse, de la surface de palier (4, 6, 17), présente une couche d'oxydation extérieure pour améliorer la résistance à l'usure de l'articulation de chaine (2), la transition entre la couche de surface nitrurée et la couche d'oxydation extérieure étant débarrassée, par tribofinition, d'une lisière superficielle poreuse présente auparavant sur la couche de surface nitrurée, et étant d'une configuration sensiblement exempte de résidus.

2. Chaine articulée (1) selon la revendication 1,
**caractérisée en ce que** l'acier allié de l'axe d'articulation (3) et/ou du maillon de chaine est un acier de nitruration, notamment un 39 CrMoV 13 9.

3. Chaine articulée (1) selon la revendication 1 ou la revendication 2,
**caractérisée en ce que** la surface de palier (4, 6, 17) présente une couche de surface nitrocarburée.

4. Chaine articulée (1) selon l'une des revendications 1 à 3,
**caractérisée en ce que** la couche de surface nitrurée présente une couche superficielle d'une épaisseur de 3 *µ*m à 30 *µ*m, qui comporte du nitrure de fer.

5. Chaine articulée (1) selon l'une des revendications 1 à 4,
**caractérisée en ce que** la couche de surface nitrurée présente une dureté de 1000 à 1500 HV 0,1.

6. Chaine articulée (1) selon l'une des revendications 1 à 5,
**caractérisée en ce que** la couche d'oxydation extérieure sur la couche de surface nitrurée présente une épaisseur de couche entre 0,5 *µ*m et 2,0 *µ*m, de préférence entre 0,75 *µ*m et 1,5 *µ*m, et notamment d'environ 1,0 *µ*m.

7. Chaine articulée (1) selon l'une des revendications 1 à 6,
**caractérisée en ce que** la couche d'oxydation extérieure présente, par rapport à la couche de surface nitrurée, une densité augmentée.

8. Chaine articulée (1) selon l'une des revendications 1 à 7,
**caractérisée en ce que** l'axe d'articulation (3) présente sur la totalité de la zone de sa couche superficielle formant la surface périphérique, une couche de surface nitrurée avec une couche d'oxydation extérieure.

9. Chaine articulée (1) selon la revendication 8,
**caractérisée en ce que** la chaine articulée (1) se présente sous la forme d'une chaine à éclisses, notamment d'une chaine à éclisses dentées.

10. Chaine articulée (1) selon l'une des revendications 1 à 9,
**caractérisée en ce que** seules les surfaces de palier (4, 6, 17) de l'ouverture d'articulation (16) dans les éclisses intérieures (15) de la chaine à éclisses, présentent une couche de surface nitrurée avec une couche d'oxydation extérieure.

11. Chaine articulée (1) selon la revendication 9 ou la revendication 10,
**caractérisée en ce que** l'axe d'articulation (3), pour former l'articulation de chaine (2), s'étend à travers les ouvertures d'articulation d'au moins deux éclisses extérieures (11) agencées à l'extérieur, et d'une ou de plusieurs éclisses intérieures ou de chaine (13, 15), agencées sous forme de paquet ou de manière alternée.

12. Chaine articulée (1) selon l'une des revendications 1 à 8,
**caractérisée en ce que** la chaine articulée (1) se présente sous la forme d'une chaine à douilles ou à rouleaux.

13. Chaine articulée (1) selon la revendication 12,
**caractérisée en ce que** la surface de palier (6) de l'ouverture de palier est formée par une douille d'articulation (5) reliée à un maillon de chaine.

14. Chaine articulée (1) selon la revendication 13,
**caractérisée en ce que** la douille d'articulation (5) présente sur la totalité de la zone de sa couche superficielle formant la surface périphérique, une couche de surface nitrurée avec une couche d'oxydation extérieure.

15. Chaine articulée (1) selon l'une des revendications 12 à 14,
**caractérisée en ce que** de manière alternée, des maillons de chaine intérieurs, qui comportent au moins deux éclisses intérieures (8) et deux douilles d'articulation (5) reliant les éclisses intérieures (8) en les maintenant à distance parallèlement l'une à l'autre, et des maillons de chaine extérieurs, qui comportent au moins deux éclisses extérieures (9) et deux axes d'articulation (3) reliant les éclisses extérieures (9) en les maintenant à distance parallèlement l'une à l'autre, sont reliés respectivement par l'intermédiaire d'une articulation de chaine (2).

16. Procédé de fabrication d'une couche de surface résistant à l'usure pour une surface de palier de l'ouverture d'articulation et/ou de l'axe d'articulation de l'articulation de chaine d'une chaine articulée, procédé
d'après lequel l'axe d'articulation (3) et/ou le maillon de chaine sont fabriqués en un acier allié,
d'après lequel une couche de surface nitrurée de la surface de palier (4, 6, 17) est appliquée au moyen d'un premier procédé, à savoir un procédé de nitruration, et une couche d'oxydation extérieure est appliquée sur la couche de surface nitrurée au moyen d'un deuxième procédé indépendant du premier procédé, à savoir un procédé d'oxydation,
et d'après lequel la surface de palier (4, 6, 17) de l'ouverture de palier et/ou de l'axe d'articulation (3) est usinée mécaniquement par tribofinition, entre le premier et le deuxième procédé, en vue de rendre la transition entre la couche de surface nitrurée et la couche d'oxydation extérieure, sensiblement exempte de résidus par la tribofinition de la couche de surface nitrurée, et de la débarrasser d'une lisière superficielle poreuse présente auparavant sur la couche de surface nitrurée.

17. Procédé selon la revendication 16,
d'après lequel le premier procédé est un procédé de nitruration au gaz de courte durée, une couche de surface nitrocarburée étant appliquée au moyen du procédé de nitruration au gaz de courte durée.

18. Procédé selon la revendication 16 ou la revendication 17,
d'après lequel le deuxième procédé est un procédé d'oxydation thermochimique.

19. Procédé selon la revendication 18,
d'après lequel le procédé d'oxydation thermochimique utilise du CO₂ en guise d'agent de réaction.
